# EUROPÄISCHE PATENTANMELDUNG

(11) **EP 1 392 042 A1**
(43) Veröffentlichungstag der Anmeldung: **25.02.2004**
(21) Anmeldenummer: 03102186.8
(22) Anmeldetag: 16.07.2003
(51) Int. Cl.: H04M 3/56

(54) **Planung von Konferenzen mittels eines IVRs**

(30) Priorität: 21.08.2002 DE 10238287
(71) Anmelder: SIEMENS AKTIENGESELLSCHAFT, 80333 München (DE)
(72) Erfinder: Friedrich, Peter, 15370, Petershagen (DE); Löbig, Norbert, 64291, Darmstadt (DE)

(57) **Zusammenfassung**

Beim Stand der Technik werden Konferenzen in der Regel durch Ziffernfolgebedienung der Telephonie oder eine graphische, an ein höherwertiges, intelligentes Endgerät gebundene Bedienoberfläche gesteuert. Dies setzt der sporadischen sofortigen Bedienbarkeit zum Buchen und Durchführen der Konferenzen her Grenzen. Im Hinblick auf die Buchung der Konferenzen sind sogar erhebliche, manuelle Interaktionen vor Konferenzbeginn erforderlich. Die Erfindung schafft hier Abhilfe, indem eine Steuerschnittstelle zwischen einer Ansage-/ Dialog-Funktion mit Spracherkennungsfunktionalität und einer Konferenzmanagement-Funktion vorgesehen ist, über die die Konferenz gebucht und gesteuert werden kann. Die Konferenzmanagement-Funktion erhält hierbei im Dialog mit den Konferenzteilnehmern die für die Konferenz relevanten Daten, reserviert im voraus die entsprechenden Ressourcen und greift über eine weitere Schnittstelle direkt auf die Steuerfunktionen der Konferenz zu.

## Beschreibung

Die Erfindung betrifft ein Verfahren und eine Vorrichtung gemäß den Oberbegriffen der Patentansprüche 1 und 10.

Dienste für Audio-Konferenzen gehören beim Stand der Technik zum unverzichtbaren Leistungsumfang von sprachvermittelnden Netzen. Sie werden von den Vermittlungsstellen des Netzes oder auch von vermittlungsstellenexternen Netzelementen realisiert. Hierbei basiert die Konferenzfunktion auf einer Mischfunktion für den Audiostrom der beteiligten Konferenzteilnehmer (Conferees), die von einer speziellen Hardware mit DSP-Kapazität (Digital Signal Prozessor) bereitgestellt wird.

Im klassischen Fall, wo der Nutzkanal einer Verbindung in die Vermittlungsstelle hineingeführt wird, können die Konferenzund hierzu benötigte Ansage- und Tonfunktionen von mit entsprechender Funktionalität ausgerüsteten peripheren Einrichtungen oder externen Einrichtungen bereitgestellt werden. Werden die Nutzdaten jedoch außerhalb der Vermittlungsstelle in einem Paketnetz geführt, so wird hierzu vorzugsweise mindestens ein externes Konferenzsystem genutzt. Dieses weist Schnittstellen zum Paketnetz für die Nutzdaten der Konferenz auf. Die Nutzdaten der Konferenz sind dabei entweder die Nutzdaten der einzelnen Konferenzteilnehmer oder die einzubringenden Ansagen/ Dialoge und Töne sowie das an die Konferenzteilnehmer zu verteilende, über mindestens eine Konferenzbrücke erzeugte Mischsignal. Zusätzlich kann das externe Konferenzsystem eine Steuerschnittstelle zu der für die Steuerung von außerhalb der Vermittlungsstelle geführten Verbindungen im Paketnetz tätigen Vermittlungsstelle aufweisen, um die gewünschten Grundfunktionen während der Konferenz zu steuern oder die Einstreuung von z. B im externen Konferenzsystem erzeugten Ansagen/ Dialogen und Tönen zu veranlassen.

Grundsätzlich weisen Konferenzdienste eine Mehrzahl von Konferenzleistungsmerkmalen auf, wobei Unterscheidung und Abgrenzung im Hinblick auf Initiierung und Steuerung des Verlaufs der Konferenz erfolgt:

So gibt es zum einen Konferenzleistungsmerkmale, mit denen man als Teilnehmer durch DIAL-IN (Einwahl des Konferenzteilnehmers in die Konferenz) oder durch DIAL-OUT (Anruf des Teilnehmers aus der Konferenz) einbezogen wird, d. h. der Verlauf der Konferenz wird durch die Verfügbarkeit der Konferenzteilnehmer charakterisiert (z. B. durch Hinzuschalten von Teilnehmern zur Konferenz oder Verlassen von Teilnehmern aus der Konferenz).

Zum anderen gibt es Konferenzleistungsmerkmale, die durch den Konferenzführer oder die Konferenzteilnehmer der gesteuerten Konferenzen geprägt sind. Hierbei können z.B. durch einen Konferenzführer mittels geeigneter DSS1-Signalisierung (ETSI ADD-ON Konferenz) oder über zusätzliche graphische Bedienung an einem PC-artigen Endgerät, Konferenzteilnehmer hinzugeschaltet, stummgeschaltet oder von der Konferenz getrennt werden. Diese die Konferenz steuernden Konferenzleistungsmerkmale sind oftmals dem Konferenz Service Operator verfügbar, der die Konferenz-Ressourcen im Netz verwalten und den Konferenzdienst überwachen kann.

Im Hinblick auf Video-Konferenzen, die zunehmend in paketbasierten Netzen Anwendung finden, erhöht sich das Steuerungsbedürfnis der Konferenz durch die beteiligten Konferenzteilnehmer, die in erhöhtem Maße Einfluss auf das zu sehende Bild haben möchten. Hierzu gehört die Auswahl eines oder mehrerer Teilnehmer während der Konferenz, ein sprachaktiviertes Umschalten des Bildes auf den augenblicklich sprechenden Konferenzteilnehmer, die gleichzeitige Bildverfügbarkeit einer gewissen Anzahl von Konferenzteilnehmer sowie das zusätzliches Einblenden von Dokumenten.

In umgekehrter Richtung informieren die existierenden Konferenzlösungen die aktuell in einer Konferenz befindlichen Teilnehmer über den Eintritt eines weiteren Teilnehmers in die Konferenz oder die Tatsache, dass ein Konferenzteilnehmer aus der Konferenz ausgeschieden ist, über Konferenztöne und/oder durch i.a. wenige Konferenzansagen entsprechenden Inhalts.

Im Hinblick auf Initiierung und Steuerung der Konferenzen werden Konferenzdienste wie folgt unterschieden:

Bei der ETSI-ADD-ON Konferenz ist die Bedienung definitionsgemäß nur in einer lokalen Vermittlungsstelle möglich. Sie wird über Teilnehmersignalisierung initiiert und gesteuert (Ziffernfolgebedienung). Sie ist primär in TDM - aber auch in paketbasierten Netzen, deren Vermittlungsstellen klassische Teilnehmersignalisierung unterstützen, realisierbar und kann unmittelbar (AD HOC) initiiert werden.

Die PRESET Konferenz stellt einen Kompromiss aus AD HOC Initiierung bei gleichzeitig vordefinierter Konferenzteilnehmerliste dar.

Als allgemeiner Service im Netz (öffentliche Konferenz) wird die PHONEMEET Konferenz angeboten. Dieser dem Chat im Internet sehr ähnliche, aber viel ältere Dienst stellt einen Service Code zur Verfügung, unter dem man sich themenspezifisch in eine Konferenz einwählen und mit bereits zum Thema eingewählten Konferenzteilnehmern austauschen kann. Die Konferenzteilnehmer kennen sich i.a. nicht und haben auch keine Gewähr dafür, dass sie bei erneutem Einwählen in eine erneute gemeinsame Konferenz verbunden werden. Die charakterisierende Eigenschaft dieses Dienstes ist, dass sich im öffentlichen Netz Teilnehmer unterhalten können, die sich i.a. nicht kennen. Hier ist keine Steuerung durch Konferenzteilnehmer erforderlich, eine automatische Störerüberwachung ist auch nicht verfügbar. Einige Netzbetreiber lassen die Verfügbar keit der Konferenz und den ungestörten Konferenzverlauf durch Operatoren überwachen, die durch sporadisches Mithören unliebsame Störer erkennen und isolieren sollen.

Vorreservierte Konferenzen sind als DIAL-IN, DIAL-OUT oder MIXED DIAL-IN/DIAL-OUT Konferenzen verfügbar. Sie sind insbesondere für Geschäftskunden nutzbar. Nachteilig ist, dass Vorreservierung und Konferenzplanung manuell erfolgen muss, eine AD HOC Verfügbarkeit ist somit nicht gegeben.

Der Vollständigkeit halber seien noch Konferenzdienste mit Web-basierter Bedienoberfläche (wie z. B. Siemens SURPASS WEBCONFER) und TERMINAL Konferenzen, die gemäß einiger Signalisierungsstandards unterstützt werden, angesprochen. Erstere sind über Internetzugriffe buchbar und steuerbar. Der Vorteil einer Web-basierten Bedienung mit Status Display wird durch den Nachteil des Internetzugriffs mit ggf. zusätzlich erforderlichem Endgerät beim Konferenzführer sowie mangelnder Interaktionen mit den Konferenzteilnehmern eingeschränkt. TERMINAL Konferenzen sind z. B. mit den Festlegungen des H.323 Standards (oder auch SIP Standards) mögliche, auf die Funktionen der Endgeräte abgestützte Konferenzen für Audio, Video, Daten, womit klassische Endgeräte nicht verwendbar sind. Hier ist eine zentrale Brücke entbehrlich. Große Konferenzen mit vielen Teilnehmern sind damit jedoch wegen der beschränkten Performanz der Endgeräte nicht möglich. Weiterer Nachteil ist der erhöhte Bandbreitenbedarf zwischen den Konferenzteilnehmern.

Für alle Konferenzdienste sind im Netz Ressourcen bereitzustellen. Da Konferenz-Ressourcen kostenintensives Investment für den Netzbetreiber bedeuten, werden sie nicht in beliebig hoher Anzahl im Netz vorgehalten. Dies bedeutet einen erhöhten Steuerungsaufwand; denn zusätzlich zu den Interaktionen des Konferenzführers und der Teilnehmer während der Konferenz kommt i.a. eine Abstimmung des Konferenztermins, der Verfügbarkeit der Konferenzteilnehmer und entsprechender Konferenz ressourcen sowie der Unterrichtung der Teilnehmer über Zeitpunkt und Zugangberechtigung hinzu, die den Erfolg einer Konferenz sichert.

Die AD HOC initiierbaren Konferenzen haben erfahrungsgemäß eine durch Ziffernfolgebedienung der Telephonie gekennzeichnete oder eine graphische, an ein höherwertiges, intelligentes, eventuell zusätzliches Endgerät gebundene Bedienoberfläche, die der sporadischen sofortigen Bedienbarkeit von beliebigem Endgerät her Grenzen setzen. Die den Konferenzteilnehmern zur Verfügung gestellten Systemtöne und -ansagen erlauben nur globale Rückschlüsse auf den Verlauf und den Status der Konferenz. Im Hinblick auf die vorreservierten Konferenzen sind unter Umständen erhebliche, manuelle Interaktionen vor Konferenzbeginn erforderlich. Derartige Hemmnisse erschweren Einsatz, Umgang und Erfolg von Konferenzlösungen.

Der Erfindung liegt die Aufgabe zugrunde, Konferenzdienste der eingangs genannten Art derart weiterzubilden, dass deren Bedienung und Steuerung erheblich erleichtert wird.

Die Erfindung wird ausgehend von den im Oberbegriff von Patentanspruch 1 angegebenen Merkmalen durch die im kennzeichnenden Teil beanspruchten Merkmale gelöst.

Ein besonderer Vorteil der Erfindung ist darin zu sehen, dass eine Steuerschnittstelle zwischen einer Ansage-/ Dialog-Funktion mit entsprechender Spracherkennungsfunktionalität und einer Konferenzmanagement-Funktion bereitgestellt wird. Damit wird die Vorbereitung und Bedienung/ Steuerung von Konferenzdiensten wesentlich vereinfacht. Beispielsweise können damit die die Konferenz steuernden funktionalen Eingaben über Ziffernfolgen entfallen, da die auf Spracherkennungsfunktionalität basierenden Techniken einen bequemeren Dialog zwischen Mensch und Machine unterstützen. Korrekturen von Eingaben durch Teilnehmer oder Operator sind damit in einfacher Weise möglich. Grundsätzlich wird damit die Bedienung für al le derzeit bekannten Konferenztypen in TDM und paketbasierten Netzumgebungen vereinfacht, also insbesondere für DIAL-IN, DIAL-OUT, MIXED DIAL-IN/OUT, ETSI ADD-ON, PHONEMEET mit/ ohne Operatorüberwachung, PRESET Konferenz.

Ferner ist die Konferenzfunktionalität insbesondere von AD HOC initiierten Konferenzen von der Teilnehmersignalisierung entkoppelt und auf der Fernebene (d. h. allgemeiner in weiteren Vermittlungssystemen etwa von konkurrierenden Netzbetreibern) verfügbar. Zusatzgeräte mit graphischer Bedienoberfläche sind nicht erforderlich, ebenso wird die Mitwirkung des Operators zur Überwachung, Buchung und/oder Ablauforganisation von Konferenzen minimiert.

Schließlich liegt der große Vorteil der Erfindung in den positiven Auswirkungen auf die Konferenzdienste. So ist die Verfügbarkeit der ETSI ADD-ON Konferenzfunktionalität mit leichter Bedienbarkeit nicht nur in der lokalen Vermittlungsstelle gegeben, sondern in einem beliebigen TDM- oder paketbasierten Netz durch Einsatz von auf (DTMF- ) Spracherkennung basierenden Techniken zur Überwindung der Restriktionen der Teilnehmersignalisierung. Vorteilhaft werden auf Spracherkennung beruhende Techniken dann benutzt, wenn insbesondere in paketbasierten Netzen komprimierende Kodierungsverfahren angewendet werden, die die störungsfreie DTMF-Übertragung nicht garantieren. Ferner können alle Buchungs- und Verwaltungsvorgänge für Konferenzdienste durch Einsatz entsprechender IVR-Logik (Interactive Voice Response) ebenso automatisiert werden wie Störererkennung und Abhörinitiierung sowie Steuerung der Folgeaktivitäten durch Spracherkennungsmechanismen. Schließlich ist eine simultane Steuerung von Konferenzfunktionalität durch (DTMF-) Spracheingaben von Konferenzführer und

Konferenzteilnehmern in einer laufenden Konferenz möglich. Damit können IVR-Dialoge für detaillierte Statusausgaben an einzelne oder alle Konferenteilnehmer in einer laufenden Konferenz weitergegeben werden. Grundsätzlich können mit diesem Konzept kombinierte ADD-ON, MEET-ME und PRESET Konferenzen realisiert und mit zusätzlichen Leistungsmerkmalen versehen werden.

Vorteilhafte Weiterbildungen der Erfindung sind in den Unteransprüchen vorgesehen.

Die Erfindung wird im folgenden anhand eines figürlich dargestellten Ausführungsbeispiels näher erläutert.

Es zeigen:
- Figur 1: die grundlegenden Verhältnisse im Netz,
- Figur 2: die für die Buchung einer Konferenz eingebundenen Netzelemente und Schnittstellen,

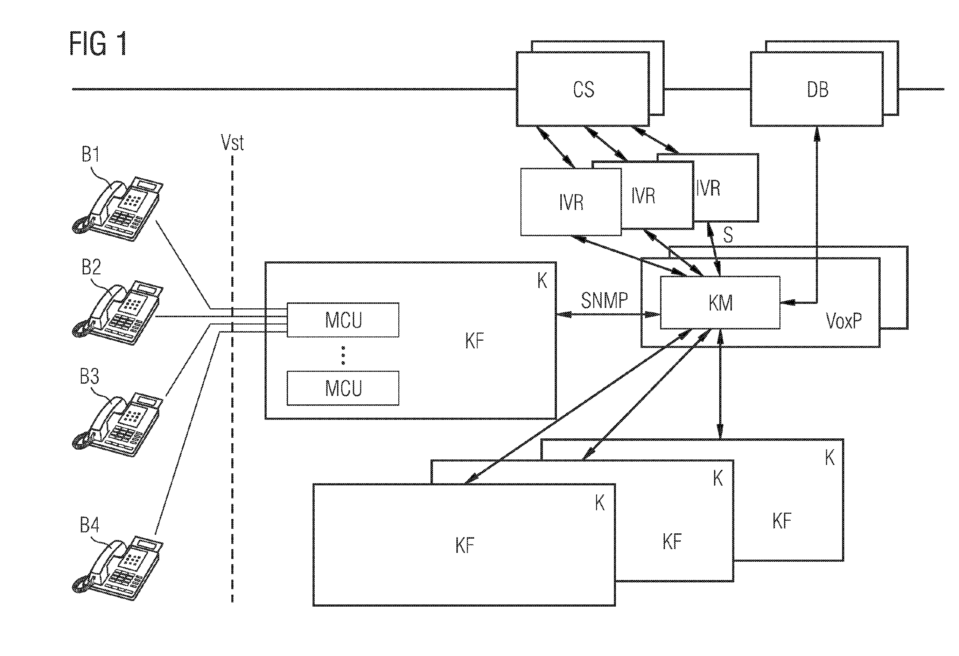

In Fig. 1 sind die grundlegenden Verhältnisse gemäß der Erfindung aufgezeigt. Es wird gemäß vorliegendem Ausführungsbeispiel davon ausgegangen, dass ein öffentliches TDM- oder paketbasiertes, insbesondere IP-basiertes Netz vorliegt, in welchem zur Bereitstellung von komfortablen Konferenzdiensten jeweils mindestens eine Ansage und Dialog-Funktion IVR, eine Konferenzmanagement-Funktion KM und mindestens eine Konferenzfunktion KF vorhanden sind.

Ferner sind Fig. 1 beispielhaft 4 Teilnehmer B1 bis B4 entnehmbar, die einer Konferenz beiwohnen möchten. Diese 4 Konferenzteilnehmer werden von einem Vermittlungssystem Vst bedient und gesteuert. Weiterhin sind in Fig. 1 mehrere voneinander unabhängige Konferenzsysteme K offenbart, in denen die Konferenz-Funktion KF zum Ablauf gelangt. Als Teil eines Konferenzsystems sind Schnittstelleneinrichtungen MCU anzusehen, die als Abschluss der Nutzdatenströme von und zu den Konferenzteilnehmern anzusehen sind.

Die Nutzdaten der Konferenzteilnehmer werden unter Steuerung der Vermittlungsstelle Vst durchgeschaltet und diesen Schnittstelleneinrichtungen MCU zugeführt. Hier wird auch die Mischung der Nutzdatenströme vorgenommen.

Die Konferenzfunktion KF stellt grundsätzlich eine klassische Mischfunktion multipler Eingangssignale für Audio- oder Videosignale dar. Ferner unterstützt sie die Verteilfunktion auch für weitere Informationen. Die hierfür vorzusehende Plattform zeichnet sich durch Telephonie-Schnittstellen zur Anpassung an Netz und Signalisierung ebenso aus wie durch DSP-basierte Mischfunktionen für den Audiostrom und ggf. weitere Funktionen zur Steuerung der Videoausgaben (z. B. Voice Activated Video Switching).

Von der Konferenzfunktion KF werden Konferenzleistungsmerkmale wie DIAL-IN oder DIAL-OUT in Konferenzverbindungen unterstützt, deren beschreibende Daten über eine Steuerschnittstelle zu einer Konferenzmanagement-Funktion KM bereitgestellt werden. Letztere kann jederzeit über diese Schnittstelle in die Konfiguration einer laufenden Konferenz steuernd eingreifen. Als Protokoll zwischen Konferenzmanagement-Funktion KM und den Konferenzsystemen K wird beispielhaft das SNMP Protokoll verwendet.

Es gibt Konferenzteilnehmer, die in der Weise ausgezeichnet sind, dass ihr Eingangsnutzdatenstrom vor dem Zumischen zum Konferenzmischsignal abgegriffen wird und einer Ansage und Dialog-Funktion IVR für gewisse Zeit zum Zwecke des Überwachens auf Störaktivitäten oder zur Erkennung legitimer, die Konferenz steuernder Eingaben (z. B. durch den Konferenzführer) zugespielt wird. Die Eigenschaft der permanenten oder temporären Zuschaltung einer Ansage und Dialog-Funktion IVR kann hierbei über eine Steuerschnittstelle S zwischen Ansage und Dialog-Funktion IVR und Konferenzmanagement-Funktion KM erfolgen.

Die Ansage und Dialog-Funktion IVR gelangt auf mindestens einer separaten Einrichtung oder ggf. auch kollokiert mit der nachstehend noch genauer erläuterten Funktion KM auf einer Einrichtung VoxP zum Ablauf. Sie dient der Dialogführung mit der Eingabeerkennung von dem Konferenzführer oder den Konferenzteilnehmern, wobei DTMF-Eingaben, menügeführte Dialoge oder vorzugsweise Schlüsselworterkennung im natürlichen Dialog (Natural Dialogue, Keyword Spotting) in Frage kommen. Die für die Ansage und Dialog-Funktion IVR benötigte HW-Plattform zeichnet sich i.a. wegen der in öffentlichen Netzen geforderten Performanz durch Telephonie-Schnittstellen aus, die die Anpassung an die Netztechnologie und Signalisierung vornehmen, sowie durch HW und SW, die die Spracherkennungsaufgaben übernehmen (z. B. DSPs, Spracherkennungsalgorithmen).

Die für die Ansage und Dialog-Funktion IVR notwendigen konferenzspezifischen Dialogabläufe sind in geeigneter Weise auf einem Content Server CS hinterlegt, z.B. in Form von VoiceXML Scripts, die aufgrund der Konferenzkonfiguration erstellt werden und die vollständige Dialogabfolge für das IVR System ergeben.

Schließlich ist Fig. 1 eine Konferenzmanagement-Funktion KM entnehmbar, die als reine SW-Funktion ausgebildet ist und die auf einer Einrichtung VoxP zum Ablauf gelangt. Von dieser wird übergreifend ggf. netzweit der Status der Konferenzsysteme K und -deren Ports überwacht und gepflegt. Eine weitere wesentliche Funktionalität liegt in der Reservierung der im voraus gebuchten Konferenzen, in der zeitgerechten Aktivierung und Überwachung/ Steuerung der Konferenzen selbst sowie in der Erzeugung von Gebührentickets insbesondere im Hinblick auf die Reservierung von Ressourcen im Netz. Von der Konferenzmanagement-Funktion KM werden Buchungsdaten und Vergebührungsdaten und ggf. Fehlerindizien sowie Verkehrs- und Statistikdaten auf einem Datenbasis Server DB hinterlegt.

Erfindungsgemäß weist nun die Ansage und Dialog-Funktion IVR eine Steuerschnittstelle S zur Konferenzmanagement-Funktion KM auf, mit der sie in der Lage ist, Buchungsdaten einer Kon ferenz oder die initialen Konferenzparameter einer AD HOC Konferenz an die Konferenzmanagement-Funktion zur weiteren Behandlung auszugeben. In umgekehrter Richtung bezieht die Ansage- und Dialog-Funktion IVR ggf. Informationen über die aktuell bzw. für den beabsichtigten Buchungszeitraum abdeckbaren Ressourcenbedarf von der Konferenzmanagement-Funktion sowie ggf. Gebühreninformationen zur Gestaltung des Dialogs mit dem Konferenzbesteller/ Konferenzführer.

Die Konferenzmanagementfunktion überblickt die Verfügbarkeit von Konferenzressourcen ggf. netzweit und kann damit insbesondere auch Konferenzen unterstützen und reservieren, die aufgrund ihrer Größe oder im Falle von Ressourcenengpässen sich über mehrere Konferenzsysteme erstrecken (Kaskadierung).

Schließlich sind aus Gründen der Ausfallsicherheit Datenbasis Server DB, Content Server CS, Konferenzmanagement-Funktion KM, Ansage- und Dialog Funktion IVR und die Konferenzfunktion KF mindestens gedoppelt ausgeführt. Die genannten Funktionen müssen nicht notwendigerweise auf verschiedenen HW-Plattformen realisiert werden. Insbesondere IVR- Funktion und KM-Funktion können auf unterschiedlichen HW-Plattformen realisiert sein.

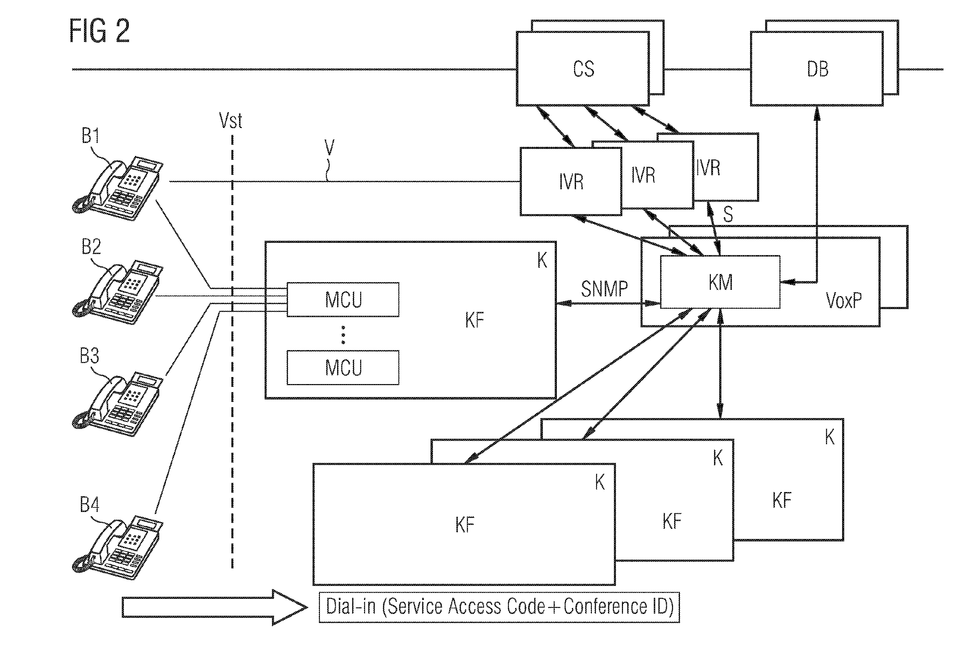

In Fig. 2 ist als Anwendung des erfindungsgemäßen Verfahrens aufgezeigt, wie die Buchung einer Konferenz erfolgen kann. Demgemäß steht im paketbasierten Netz eine Mehrzahl von Konferenzsystemen K zur Verfügung. Jedes dieser Konferenzsysteme K bietet eine gewisse Anzahl von Konferenzports für Audiooder Videokonferenzen an. Die Konferenzsysteme K stellen eigenständige Netzelemente dar, die nicht von den Vermittlungsstellen Vst im Netz gesteuert werden. Konferenzverbindungen stellen sich daher den Vermittlungsstellen Vst des Netzes wie eine Mehrzahl von Durchschaltungen zu oder von einer Nebenstelle oder einer Mehrzahl von Nebenstellen des Netzes dar.

Der Konferenzdienst wird von den Konferenzsystemen K selbstständig abgewickelt. Nach Maßgabe der erfolgten Reservierung werden die Teilnehmer einer Konferenz zum gewünschten Zeitpunkt angerufen, oder die Konferenz wird in der gewünschten Zeitspanne für die Konferenzteilnehmer anrufbar. Konferenztöne oder Konferenzansagen werden den Konferenzteilnehmern von den Konferenzssystemen K selbständig angelegt bzw. zugemischt. Hierzu kann auf die voranstehend genannten IVR-Funktionen oder auf konferenzsystemintegrierte Ansage- und Tonfunktionen zurückgegriffen werden.

Die Buchung der Konferenz kann in der Praxis über eine Mehrzahl von Servern erfolgen. Letztere haben über eine unter Umständen gedoppelte und damit ausfallsichere Datenbasis Überblick über die netzweite Verfügbarkeit der Konferenzressourcen. Gegebenfalls werden in der Datenbasis auch die Daten der gebuchten Konferenzen hinterlegt, um sie gegen Verlust durch Ausfallsituationen zu sichern. Nachdem durch entsprechenden Operatordialog die Kenndaten der gewünschten Konferenz bekannt gegeben wurden (also typischerweise die Anzahl der Konferenzteilnehmer, Beginnzeitpunkt, Dauer, Rufnummer der anzurufenden Konferenzteilnehmer und Eigenschaften der Konferenz (Audio,Video,Bandbreite) und Eigenschaften der Konferenzteilnehmer (Konferenzteilnehmer mit und ohne Sprechberechtigung)) erfolgt die Reservierung der Konferenzressourcen in der Datenbasis. Gleichzeitig wird die Konferenzmanagement-Funktion KM der Konferenz aktiviert, die dafür Sorge trägt, dass zum gewünschten Zeitpunkt die beteiligten Konferenzsysteme K mit den Daten der Konferenz versorgt sind und diese aktivieren (d.h. Ressourcen für DIAL-IN freischalten oder DIAL-OUT gemäß Konferenzteilnehmer-Liste) initiieren.

Die Buchung der Konferenz erfolgt durch Anruf einer Servicenummer, auf den sich ein automatischer Sprachdialog des Reservierungssystems mit dem Anrufer zur Feststellung der Konferenzdaten entwickelt. Dieser Dialog kann im einfachsten Fall natürlich DTMF gesteuert sein und menüartig mit oder oh ne Spracherkennung ablaufen. Vorzugsweise ist er durch geeignete Spracherkennungsmechanismen jedoch schlüsselwortgesteuert und erlaubt dem Anrufer hierdurch, seine Buchung in freier Rede durchzuführen, die über eine Verbindung V zwischen Ansage- und Dialog System IVR und dem reservierenden Anrufer geführt wird.

Beispielhaft könnte die Buchung im natürlichen Dialog folgendermaßen ablaufen:

Maschine: Guten Tag, herzlich willkommen beim DIAL-IN Konferenzdienst der Deutschen Telekom. Was können wir für Sie tun

Anrufer: Ich möchte eine Konferenz anmelden für morgen mit 5 Teilnehmern.
Maschine: Ihre Konferenz soll morgen, am 28.03.2002, stattfinden und soll maximal 5 Teilnehmer umfassen. Bitte nennen Sie Beginnzeitpunkt und Dauer.

Anrufer: Beginn soll 9:30 Uhr sein und ich rechne damit, dass wir maximal eine 3/4 Stunde brauchen werden. Aber da fällt mir ein, es werden wohl doch nur 4 Teilnehmer notwendig werden.

Maschine: Sie möchten also morgen, am 28.03.2002, um 9:30h eine Konferenz mit maximal 4 Teilnehmern für die maximale Dauer von 45 Minuten reservieren ?

Anrufer: Ja, genau !

Maschine: Möchten Sie eine Videokonferenz bestellen ?

Anrufer: Wir haben leider nur uralte Endgeräte.

Maschine: Die Konferenzressourcen für eine Audiokonferenz mit bis zu 4 Teilnehmern stehen morgen, also am 28.03.2002, von 9:30 bis 10:15 Uhr für Sie bereit. Die Gebühr beträgt EUR 102,43, mit der wir Ihre Telephonrechnung belasten werden. Wollen Sie die Konferenz nun buchen ?

Anrufer: O.k., ist aber recht teuer !

Maschine: Die Konferenz ist für Sie gebucht. Die DIAL-IN Nummer, die Sie bitte Ihren Konferenzteilnehmern mitteilen, lautet 089 / 722- 24895 346. Die Kosten gehen zu Lasten Ihres Anschlusses 089/830930 und betragen EUR 102,43. Kostenpflichtige Änderungen Ihres Auftrages nehmen wir unter Bezugnahme auf die DIAL-IN Nummer bis 15 Minuten vor Konferenzbeginn gerne entgegen. Im Hinblick auf den Tarif des Konferenzdienstes machen wir Sie aufmerksam auf unseren Mondscheintarif zwischen 23:30 und 3:30 Uhr. Haben Sie weitere Wünsche?

Anrufer: Nein

Maschine: Vielen Dank für Ihren Anruf und frohe Ostern.

Der Ablauf des Dialogs wird vorzugsweise zentral als VoiceXML -Seite abrufbar gestaltet. Die voranstehend genannten Server haben Ansage- und Dialog-Funktion IVR und ggf. zusätzlich integrierte Konferenzmanagement- Funktionen KM. Sie wickeln insbesondere den IVR-Dialog mit dem die Konferenz buchenden Anrufer ab und stellen die Kapazität zur Bearbeitung der Benutzereingaben bereit.

Mit der aufgezeigten Funktionsteilung ergeben sich viele neue Leistungsmerkmale. Zum Beispiel können der Auftraggeber oder die DIAL-OUT Konferenzteilnehmer bei Ausfallsituationen über das Nichtzustandekommen ihrer Konferenz informiert werden. Erinnerungsanrufe/ Dialoge oder andersartige Hinweise via FAX oder Email vor Konferenzbeginn sind ebenfalls möglich. Die Administration von PRESET Konferenzen wird unter Einbeziehung der Konferenzressourcen möglich. Vergabe und Ta riffierung von Prioritäten mit zugehörigem Dialog auch bei Ressourcenmangelsituationen werden kundenfreundlich möglich.

Im Falle einer PRESET Conference erfolgt statt des Dialogs zur Reservierung der Konferenz ein Dialog zur Erstellung und Modifikation einer Konferenzliste. Statt der Ausgabe der Konferenzidentifikation erfolgt die Ausgabe der Aktivierungseinwahl der erstellten oder modifizierten Konferenzliste. Im einfachsten Falle erfolgt die Aktivierung durch Einwahl in das IVR-System, worauf dieses die Konferenzmanagement-Funktion KM der PRESET Konferenz sofort gemäß in der Datenbasis hinterlegter Konferenzliste anstößt. Da die PRESET Konferenz AD HOC initiiert wird, können sich unvorhersehbare Ressourcenengpässe einstellen, die das IVR-System dem die PRESET Konferenz initiierenden Teilnehmer mitteilen kann und automatisch Maßnahmen zur Abhilfe diskutieren kann, z. B. Reduktion der Konferenzliste für die anstehende PRESET Aktivierung. Ebenfalls kann die Weiterführung der Konferenz ggf. mit reduzierter Teilnehmeranzahl nach Ablauf der reservierten Zeit angeboten werden, falls die Konferenzressourcen im Netz das zulassen.

## Patentansprüche

1. Verfahren zum Buchen von Konferenzen, mit mindestens einer Dialog-Funktion (IVR) und mindestens einer Konferenzfunktion (KF),
**dadurch gekennzeichnet,**
**dass** eine Konferenzmanagement-Funktion (KM) zur Steuerung der mindestens einen Konferenzfunktion (KF) vorgesehen ist,
**dass** das Buchen der Konferenz durch den Anruf einer Servicenummer durch einen der Konferenzteilnehmer (B1...B4) erfolgt, woraufhin sich mit Unterstützung der Konferenzmanagement-Funktion (KM) ein automatischer (Sprach-) Dialog zwischen der Ansage-/ Dialog-Funktion (IVR) und dem Anrufer zur Feststellung von Kenndaten der gewünschten Konferenz und der Konferenzteilnehmer entwickelt,
**dass** von der Konferenzmanagement-Funktion (KM) nach Maßgabe dieser Kenndaten die Reservierung der Konferenzressourcen unterstützt und die zeitgerechte Initiierung der Konferenz sichergestellt wird.

2. Verfahren nach Anspruch 1,
**dadurch gekennzeichnet,**
**dass** die Aktivierung der Konferenz von die Konferenzmanagement-Funktion (KM) gesteuert wird, indem zum gewünschten Zeitpunkt die beteiligten Konferenzsysteme (K) mit den Daten der Konferenz versorgt werden.

3. Verfahren nach Anspruch 1, 2,
**dadurch gekennzeichnet,**
**dass** der Dialog zwischen Ansage-/ Dialog-Funktion (IVR) und dem in Frage kommenden Konferenzteilnehmer DTMF-gesteuert ist.

4. Verfahren nach Anspruch 1, 2,
**dadurch gekennzeichnet,**
**dass** die Ansage-/ Dialogfunktion (IVR) mit einer gegebenenfalls schlüsselwortgesteuerten (Keyword Spotting) Spracher kennungsfunktion versehen ist, wodurch der Dialog zwischen Ansage-/ Dialog-Funktion (IVR) und dem in Frage kommenden Konferenzteilnehmer Sprach-gesteuert ist.

5. Verfahren nach einem der Ansprüche 1 bis 4,
**dadurch gekennzeichnet,**
**dass** die Kenndaten der gewünschten Konferenz durch Anzahl, Beginnzeitpunkt, Dauer, und Rufnummer der anzurufenden Konferenzteilnehmer sowie durch die Eigenschaften der Konferenz im Hinblick auf Audio, Video, oder Bandbreite definiert sind.

6. Verfahren nach einem der Ansprüche 1 bis 4,
**dadurch gekennzeichnet,**
**dass** die Kenndaten der Konferenzteilnehmer im Hinblick auf ihre Sprechberechtigung definiert sind.

7. Verfahren nach einem der voranstehenden Ansprüche,
**dadurch gekennzeichnet,**
**dass** die Konferenzmanagement-Funktion (KM) die Verfügbarkeit von Konferenzfunktion (KF) und ggf. IVR-Funktion (IVR) übergreifend kennt, Reservierungen entsprechend vornimmt und verlustsicher auf dem Hintergrundspeicher ablegt.

8. Verfahren nach einem der voranstehenden Ansprüche,
**dadurch gekennzeichnet,**
**dass** die Konferenzmanagement-Funktion (KM), die IVR-Funktion (IVR) sowie die Konferenzfunktion (KF) jeweils mindestens gedoppelt auf mindestens zwei unterschiedlichen HW-Plattformen realisiert sind.

9. Verfahren nach einem der voranstehenden Ansprüche,
**dadurch gekennzeichnet,**
**dass** die Konferenzmanagement-Funktion (KM) jederzeit in die Steuerung einer Konferenz eingreifen kann und die IVR-Funktion (IVR) zur Information und Abfrage der Konferenzteilnehmer aktivieren kann.

10. Vorrichtung zum Buchen von Konferenzen, mit mindestens einer Dialog-Funktion (IVR) und mindestens einer Konferenzfunktion (KF), die auf wenigstens einem Konferenzsystem (K) zum Ablauf gelangt,
**dadurch gekennzeichnet,**
**dass** eine Steuerschnittstelle (S) zwischen Ansage-/ Dialog-Funktion (IVR) und einer Konferenzmanagement-Funktion (KM) vorgesehen ist, über die die Konferenzmanagement-Funktion (KM) die Buchungsdaten zur Initiierung und Steuerung wenigstens einer Konferenz erhält, nach Überprüfung der Ressourcen mit dem Auftraggeber abstimmt und die Buchung in Richtung Auftraggeber bestätigt.
